# EUROPEAN PATENT APPLICATION

(11) **EP 4 597 180 A1**
(43) Date of publication of application: **06.08.2025**
(21) Application number: 24875713.0
(22) Date of filing: 14.06.2024
(51) Int. Cl.: G02B 6/036, G02B 6/028

(54) **LOW-LOSS SINGLE-MODE OPTICAL FIBER**

(30) Priority: 11.12.2023 CN 202311701394
(71) Applicant: Zhongtian Technology Advanced Materials Co., Ltd., Jiangsu 226010 (CN); Zhongtian Technology Group Co., Ltd., Nantong, Jiangsu 226463 (CN); Zhongtian Technology Fiber Optics Co., Ltd., Nantong, Jiangsu 226000 (CN)
(72) Inventor: WANG, Jianqing, Nantong, Jiangsu 226010 (CN); SHEN, Yichun, Nantong, Jiangsu 226010 (CN); QIN, Yu, Nantong, Jiangsu 226010 (CN); JIANG, Xinli, Nantong, Jiangsu 226010 (CN); CHEN, Yali, Nantong, Jiangsu 226010 (CN); XU, Xikai, Nantong, Jiangsu 226010 (CN); ZHOU, Hui, Nantong, Jiangsu 226010 (CN); ZHANG, Junyi, Nantong, Jiangsu 226010 (CN); ZHANG, Zelin, Nantong, Jiangsu 226010 (CN)
(74) Representative: Rooney, John-Paul
(86) International application number: PCT/CN2024/099275
(87) International publication number: WO 2025/123624

(57) **Abstract**

The present application provides a low-loss single-mode optical fiber, which relates to the technical field of communication optical fibers and is used for solving a technical problem of high attenuation of single-mode optical fibers. The low-loss single-mode optical fiber comprises a core layer and a cladding layer surrounding the core layer, wherein the core layer comprises an inner core layer and an outer core layer, the inner core layer is doped with P and GeO₂, and the outer core layer is doped with F, P and GeO₂. By adjusting the elements doped in the inner core layer and the outer core layer, Rayleigh scattering and the attenuation coefficient of the optical fiber are reduced, so the optical fiber has lower attenuation loss and a better bending resistance property on the premise that all properties of the optical fiber are compatible with international standards.

## Description

### I. Technical Field

The present application relates to the technical field of communication optical fibers, in particular to a low-loss single-mode optical fiber.

### II. Background Art

Optical fibers are transmission medium of optical fiber communication networks. The lower the attenuation of the optical fiber is, the less the optical power loss of the entire link will be, thus a longer repeaterless transmission distance can be obtained in the transmission process, thereby the cost of network and system construction can be effectively reduced.

The main component of optical fibers is SiO₂. When an optical fiber preform is manufactured, the refractive index of the core layer can be improved by doping GeO₂, which is the main source for reducing the attenuation of the optical fiber; besides, an element F can be doped in the cladding layer, to decrease the refractive index of the cladding layer, and ensure a refractive index difference value between the core layer and the cladding layer, thereby the attenuation of the optical fiber can be further reduced.

However, in the above technical scheme, when an optical fiber preform rod is manufactured, the viscosity/thermal expansion coefficient between the core layer and the cladding layer is inverted, the matching of the viscosity/thermal expansion coefficient of the optical fiber structure is unbalanced, and relatively larger stress is generated at the interface between the core layer and the cladding layer, leading to increased attenuation of the optical fiber.

### III. Contents of the Invention

In view of the above problems, a low-loss single-mode optical fiber is provided in the embodiments of the present application, so as to solve the technical problem of high attenuation of single-mode optical fibers in the related art.

To attain the above object, the following technical scheme is provided in the embodiments of the present application:
A low-loss single-mode optical fiber provided in the embodiments of the present application comprises a core layer and a cladding layer surrounding the core layer, the core layer comprises an inner core layer and an outer core layer, the inner core layer is doped with P and GeO₂, and the outer core layer is doped with F, P and GeO₂.

In a possible implementation, the inner core layer is doped with GeO₂ at a molar concentration of 0.10 to 1.5 mol% and the element P at a molar concentration of 0.01 to 0.3 mol%; the outer core layer is doped with GeO₂ at a molar concentration of 0.10 to 1.5 mol%, the element P at a molar concentration of 0.01 to 0.3 mol%, and the element F at a molar concentration of 0 to 1.5 mol%.

In a possible implementation, the refractive index of the core layer presents a parabolic gradient distribution.

In a possible implementation, the cladding layer comprises an inner cladding layer, a first depressed layer, a doped layer, a second depressed layer and an outer cladding layer, which are layered sequentially from the center to the periphery; the inner cladding layer is doped with GeO₂ at a molar concentration of 0 to 0.2 mol%, the element P at a molar concentration of 0.01 to 0.3 mol%, and the element F at a molar concentration of 0.5 to 1.5 mol%; the first depressed layer is doped with GeO₂ at a molar concentration of 0 to 0.2 mol% and the element F at a molar concentration of 0 to 2.0 mol%; the doped layer is doped with GeO₂ at a molar concentration of 0 to 0.2 mol% and the element F at a molar concentration of 0 to 2.0 mol%; the second depressed layer is doped with GeO₂ at a molar concentration of 0 to 0.2 mol% and the element F at a molar concentration of 0 to 3.0 mol%.

In a possible implementation, a relative refractive index difference Δ1 between the inner core layer and the outer cladding layer is 0.10% to 0.25%; a relative refractive index difference Δ2 between the outer core layer and the outer cladding layer is 0% to 0.20%; a relative refractive index difference Δ3 between the inner cladding layer and the outer cladding layer is -0.10% to -0.30%; a relative refractive index difference Δ4 between the first depressed layer and the outer cladding layer is -0.25% to -0.50%; a relative refractive index difference Δ5 between the doped layer and the outer cladding layer is -0.30% to 0%; a relative refractive index difference Δ6 between the second depressed layer and the outer cladding layer is -0.50% to 0%.

In a possible implementation, the radius R1 of the inner core layer is 2 to 6 µm; the radius of the outer core layer is R2, and R2 minus R1 is within a range of 3.0 to 5.0 µm; the radius of the inner cladding layer is R3, and R3 minus R2 is within a range of 2 to 5 µm; the radius of the first depressed layer is R4, and R4 minus R3 is within a range of 2 to 8 µm; the radius of the doped layer is R5, and R5 minus R4 is within a range of 5 to 30 µm; the radius of the second depressed layer is R6, and R6 minus R5 is within a range of 10 to 22 µm; the radius R7 of the outer cladding layer is 60 to 65 µm.

In a possible implementation, an application wavelength range of the low-loss single-mode optical fiber is 1,310 to 1,550 nm.

In a possible implementation, the mode field diameter of the low-loss single-mode optical fiber at an application wavelength of 1,310 nm is 8.7 to 9.7 µm; the mode field diameter of the low-loss single-mode optical fiber at an application wavelength of 1,550 nm is 9.5 to 10.5 µm.

In a possible implementation, the attenuation coefficient of the low-loss single-mode optical fiber at the application wavelength of 1,310 nm is smaller than or equal to 0.350 dB/km; and the attenuation coefficient of the low-loss single-mode optical fiber at the application wavelength of 1,550 nm is smaller than or equal to 0.175 dB/km.

In a possible implementation, the zero-dispersion wavelength range of the low-loss single-mode optical fiber is 1,300 to 1,324 nm, and the dispersion slope of the low-loss single-mode optical fiber at the zero-dispersion wavelength is smaller than or equal to 0.092 ps/(nm²*km); and the dispersion coefficient of the low-loss single-mode optical fiber at the application wavelength of 1,550 nm is smaller than or equal to 18 ps/(nm*km).

The low-loss single-mode optical fiber provided in the embodiments of the present application comprises a core layer and a cladding layer surrounding the core layer, the core layer comprises an inner core layer and an outer core layer, the inner core layer is doped with P and GeO₂, and the outer core layer is doped with F, P and GeO₂. By means of a reasonable optical fiber structure design and control of the doped elements in the core layer, Rayleigh scattering can be reduced on the premise that the profile structure of the core rod remains unchanged, so as to attain a purpose of reducing the attenuation coefficient of the optical fiber. Thus, the optical fiber has lower attenuation loss and better bending resistance on the premise that all the properties of the optical fiber are compatible with the G.652 standard.

### IV. Description of Drawings

To explain the technical scheme in the embodiments of the present application or in the prior art more clearly, the drawings to be used for describing the examples or the prior art will be introduced below briefly. Obviously, the drawings used in the description below only illustrate some examples of the present application, and those having ordinary skills in the art can work out other drawings based on these drawings without expending any creative labor.
Fig. 1 is a schematic cross-sectional view of a low-loss single-mode optical fiber provided in embodiments of the present application;
Fig. 2 is a schematic diagram illustrating the profile structure of the low-loss single-mode optical fiber provided in embodiments of the present application;
Fig. 3 is a schematic diagram illustrating the refractive index distribution of the low-loss single-mode optical fiber provided in Example 1 of the embodiments of the present application;
Fig. 4 is a schematic diagram illustrating stress distribution comparison of the low-loss single-mode optical fiber provided in Example 1 of the embodiments of the present application;
Fig. 5 is a schematic diagram illustrating the refractive index distribution of the low-loss single-mode optical fiber provided in Example 4 of the embodiments of the present application;
Fig. 6 is a schematic diagram illustrating the refractive index distribution of the low-loss single-mode optical fiber provided in Example 5 of the embodiments of the present application;
Fig. 7 is a schematic diagram illustrating the refractive index distribution of the low-loss single-mode optical fiber provided in Example 6 of the embodiments of the present application.

### Reference Numerals:

100: inner core layer;
200: outer core layer;
300: inner cladding layer;
400: first depressed layer;
500: doped layer;
600: second depressed layer;
700: outer cladding layer.

### V. Embodiments

As stated in the Background Art, the single-mode optical fibers in the related art have a problem of high optical fiber attenuation. It is found by technicians that the reason for this problem is that: the existing low-loss bending-insensitive single-mode optical fibers have a core layer that is usually co-doped with elements Ge and F in order to balance the doped amount and the quartz viscosity in the profile design to achieve lower attenuation. Owing to the fact that the doping of the element F decreases refractive index of the core layer, it is necessary to dope more Ge to keep the refractive index of the core layer unchanged, but doping more Ge will lead to increased scattering; at the same time, the attenuation, dispersion parameters, mode field diameter, cable wavelength and other parameters of a low-loss cut-off wavelength-shifted single-mode optical fiber are affected by the structure of the core layer. The current profile of the core layer employs a stepped design, and there is an obvious sudden stress change between the core layer and the cladding layer, which leads to high attenuation. Moreover, when the profile structure of the core layer is adjusted, all parameters are changed synchronously, and it is difficult for the indexes to meet the G.652 standard (the G.652 standard specifies the characteristics and properties of single-mode optical fibers (SMFs), including mode distribution, mode distribution constant, maximum attenuation, maximum refractive index variation, tensile strength and thermal deformation temperature, etc.). In order to ensure that the various parameters are compatible with the G.652 standard, the design values of the depth and width of the depressed layer of the toroidal core are limited, and the improvement of the bending resistance of the optical fiber is limited, so it is difficult to meet the G.657 bending loss standard.

In addition, the existing low-loss cut-off wavelength-shifted single-mode optical fiber is drawn directly through a matching pure silicon bushing after the profile of the core rod is determined, and it is inconvenient to adjust the position of the cut-off wavelength shift; consequently, the optical fiber drawn from a preform rod has a narrow applicable wavelength range. In view of the above technical problems, a low-loss single-mode optical fiber is provided in the embodiments of the present application. By means of reasonable optical fiber structure design, core layer doping control and outer core layer doping control, the optical fiber has lower attenuation loss and better bending resistance on the premise that all properties of the optical fiber are compatible with the G.652 standard; at the same time, the position of the cut-off wavelength shift can be controlled by adjusting the refractive index of the F-doped sandwich tube that matches the core rod during drawing on the premise that the profile structure of the core rod is kept unchanged, so that the drawn optical fiber can be adjusted to different wavelength ranges and the bending property can be further improved.

In order to make the above objects, features and advantages of the embodiments of the present application understood more clearer and easier to understand, the technical scheme in the embodiments of the present application will be described below clearly and completely with reference to the accompanying drawings in the embodiments of the present application. Apparently, the examples described herein are only some examples of the present application, rather than all examples of the present application. Those skilled in the art can obtain other examples based on the examples of the present application without expending any creative labor; however, all those examples shall be deemed as falling in the scope of protection of the present application.

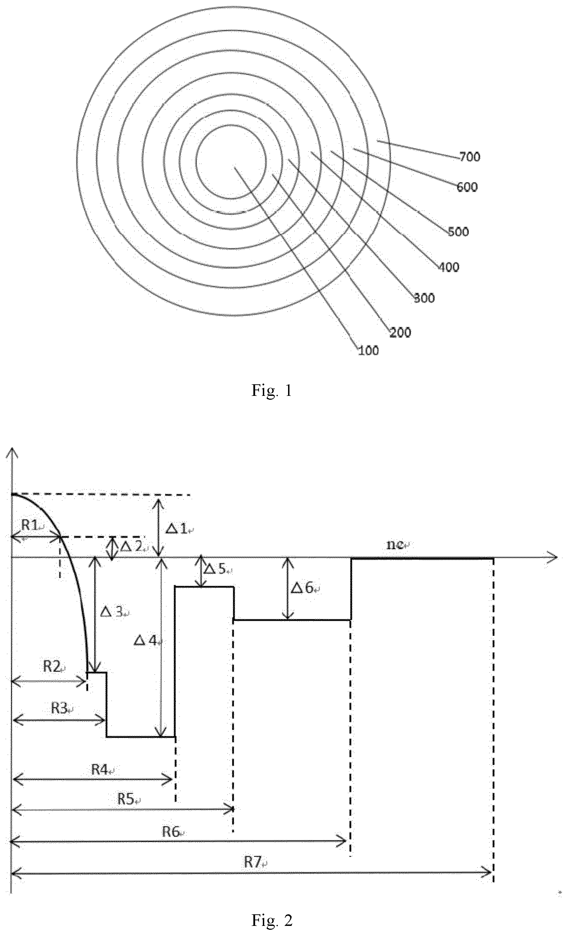

A low-loss single-mode optical fiber is provided in the embodiments of the present application, as shown in Figs. 1 and 2. Fig. 1 is a schematic cross-sectional view of the low-loss single-mode optical fiber provided in an embodiment of the present application, and Fig. 2 is a schematic diagram illustrating the profile structure of the low-loss single-mode optical fiber provided in the embodiment of the present application. The low-loss single-mode optical fiber comprises a core layer and a cladding layer surrounding the core layer, the core layer comprises an inner core layer 100 and an outer core layer 200, and the cladding layer comprises an inner cladding layer 300, a first depressed layer 400, a doped layer 500, a second depressed layer 600 and an outer cladding layer 700, which are layered sequentially from the center to the periphery; in this example of the present application, the radius R1 of the inner core layer 100 may be 2 to 6 µm, the radius of the outer core layer 200 is R2, R2 minus R1 is within a range of 3.0 to 5.0 µm; the radius of the inner cladding layer 300 is R3, R3 minus R2 is within a range of 2 to 5 µm; the radius of the first depressed layer 400 is R4, R4 minus R3 is within a range of 2 to 8 µm; the radius of the doped layer 500 is R5, R5 minus R4 is within a range of 5 to 30 µm; the radius of the second depressed layer 600 is R6, R6 minus R5 is within a range of 10 to 22 µm; the radius of the outer cladding layer 700 is 60 to 65 µm, and the radius R7 of the outer cladding layer 700 may be 62.5 µm.

The refractive index is changed by doping GeO₂ and element P in the inner core layer 100, wherein, the inner core layer 100 is doped with GeO₂ at a molar concentration of 0.10 to 1.5 mol% and element P at a molar concentration of 0.01 to 0.3 mol%.

The refractive index is changed by doping GeO₂, element P and element F in the outer core layer 200, wherein, the outer core layer 200 is doped with GeO₂ at a molar concentration of 0.10 to 1.5 mol%, element P at a molar concentration of 0.01 to 0.3 mol% and element F at a molar concentration greater than 0 mol% and smaller than 1.5 mol%.

The refractive index is changed by doping GeO₂, element P and element F in the inner cladding layer 300, wherein, the inner cladding layer 300 is doped with GeO₂ at a molar concentration of 0 to 0.2 mol%, element P at a molar concentration of 0.01 to 0.3 mol% and element F at a molar concentration of 0.5 to 1.5 mol%.

The refractive index is changed by doping GeO₂ and element F in the first depressed layer 400, wherein, the first depressed layer 400 is doped with GeO₂ at a molar concentration of 0 to 0.2 mol% and element F at a molar concentration of 0 to 2.0 mol%.

The refractive index is changed by doping GeO₂ and element F in the doped layer 500, wherein, the doped layer 500 is doped with GeO₂ at a molar concentration of 0 to 0.2 mol% and element F at a molar concentration of 0 to 2.0 mol%.

The refractive index is changed by doping GeO₂ and element F in the second depressed layer 600, wherein, the second depressed layer is doped with GeO₂ at a molar concentration of 0 to 0.2 mol% and element F at a molar concentration of 0 to 3.0 mol%.

Thus, the refractive index of the core layer presents a parabolic gradient distribution, which can realize gradual change of the physical properties and doping concentration, eliminate or reduce the interfacial stress difference between the core layer and the cladding layer, and decrease the dispersion value at 1,550 nm to meet the requirements of the G652 standard under the condition that the mode field diameter remains unchanged.

It should be noted that the relative refractive index difference Δ1 between the inner core layer 100 and the outer cladding layer 700 is kept between 0.10% and 0.25%, the relative refractive index difference Δ2 between the outer core layer 200 and the outer cladding layer 700 is kept between 0% and 0.20%, the relative refractive index difference Δ3 between the inner cladding layer 300 and the outer cladding layer 700 is kept between -0.10% and -0.30%, the relative refractive index difference Δ4 between the first depressed layer 400 and the outer cladding layer 700 is kept between -0.25% and -0.50%, the relative refractive index difference Δ5 between the doped layer 500 and the outer cladding layer 700 is kept between -0.30% and 0%, and the relative refractive index difference Δ6 between the second depressed layer 600 and the outer cladding layer 700 can be kept between -0.50% and 0%.

The above refractive indexes can keep the application wavelength range of the single-mode optical fiber between 1,310 nm and 1,550 nm.

Wherein, at 1,310 nm application wavelength, the mode field diameter of the single-mode optical fiber is 8.7-9.7 µm, preferably the mode field diameter is 9.2 µm, and the attenuation coefficient is smaller than or equal to 0.350 dB/km; at 1,310 nm application wavelength, the attenuation coefficient of the single-mode optical fiber may be 0.290 dB/km. At 1,550 nm application wavelength, the mode field diameter of the single-mode optical fiber is 9.5-10.5 µm, preferably the mode field diameter is 10.5 µm, and the attenuation coefficient is smaller than or equal to 0.175 dB/km; at 1,550 nm application wavelength, the attenuation coefficient of the single-mode optical fiber also may be smaller than or equal to 0.165 dB/km. The performance indexes can be compatible with the G.652 and G.657A2 standards.

The above refractive indexes also can keep the zero-dispersion wavelength range of the single-mode optical fiber between 1,300 nm and 1,324 nm; wherein, at zero-dispersion wavelength, the dispersion slope of the single-mode optical fiber is smaller than or equal to 0.092 ps/(nm²*km); at 1,550 nm application wavelength, the dispersion coefficient of the single-mode optical fiber is smaller than or equal to 18ps/(nm*km).

It should be noted that the molar concentration of the doped element P is lower than 0.3 mol%, at the same time the effect of the absorption peak of the element P at 1,570 nm on the waveguide attenuation of the optical fibers at 1,530-1,625 nm can be basically eliminated by co-doping with the element F. When the molar concentration of the doped element P is lower than 0.3 mol%, and after the single-mode optical fiber doped with the element P is treated with deuterium gas, the hydrogen aging damage resistance performance of the single-mode optical fiber is essentially the same as an ordinary single-mode optical fiber not doped with the element P, and meets standard requirement.

At the same time, the profile structure design is realized by adjusting the flow ratio of SiO₂, GeO₂, element F and element P in the deposition process, wherein, the principle of doping GeO₂ is to minimize its doping amount, so as to reduce the Rayleigh scattering loss caused by GeO₂ doping.

Owing to the doping of trace P in the core layer replaces the effect of the F doping on the viscosity adjustment of the core layer, if the inner core layer is not doped with F, the doping amount of GeO₂ in the core layer can be further reduced, thereby the Rayleigh scattering can be reduced, on the premise that the refractive index difference value between the core layer and the cladding layer is unchanged.

The low-loss single-mode optical fiber in an embodiment of the present application comprises the core layer and the cladding layer surrounding the core layer, wherein the core layer comprises the inner core layer 100 and the outer core layer 200, and the cladding layer comprises the inner cladding layer 300, the first depressed layer 400, the doped layer 500, the second depressed layer 600 and the outer cladding layer 700, which are layered sequentially from the center to the periphery; the inner core layer 100 is doped with P and GeO₂, the outer core layer 200 is doped with F, P and GeO₂, the inner cladding layer 300 is doped with GeO₂, element P and element F, the first depressed layer 400 is doped with GeO₂ and element F, the doped layer 500 is doped with GeO₂ and element F, and the second depressed layer 600 is doped with GeO₂ and element F. By means of a reasonable optical fiber structure design and core layer doping control, Rayleigh scattering is reduced by adjusting the doped elements in the inner core layer and the outer core layer on the premise that the profile structure of the core rod is unchanged, so as to attain a purpose of reducing the attenuation coefficient of the optical fiber.

At the same time, the position of the cut-off wavelength shift is controlled by adjusting the refractive index of a matching F-doped sandwich tube that is used in the drawing, so that the drawn optical fiber can be adjusted to different wavelength ranges, and the optical fiber has lower attenuation loss and better bending resistance on the premise that all properties of the optical fiber are compatible with the G.652 standard.

It should be noted that the low-loss single-mode optical fiber provided in the embodiment of the present application is provided with the doped layer 500 and the second depressed layer 600 near the outer cladding layer 700, so, on one hand, the refractive index of the core layer can be effectively reduced and the Rayleigh scattering loss caused by GeO₂ doping can be reduced on the premise of preventing optical power leakage; on the other hand, under the condition that the refractive index of the core rod remains unchanged, the adjustment of the cut-off wavelength shift position can be realized by adjusting the refractive index of the second depressed layer 600, and the optical fiber can be adjusted and used in a wide wavelength range of 1,260 - 1,625 nm (O+S+L waveband), thereby the difficulties in the manufacturing process of the optical fiber preform rod with a differentiated design can be reduced.

At the same time, in addition to controlling the position of the cut-off wavelength shift, on the premise that other main properties (MFD and dispersion performance) meet the G652 standard, the cut-off wavelength of the low-loss single-mode optical fiber in the example of the present application can be adjusted according to the application waveband, so as to obtain optimal bending performance.

For example, the cable cut-off wavelength is smaller than or equal to 1,260 nm for O waveband application, the cable cut-off wavelength is smaller than or equal to 1,530 nm for C+L waveband application, and the cut-off wavelength is smaller than or equal to 1,420 nm for S+C+L waveband application.

It should also be noted that the inner core layer 100 and the outer core layer 200 of the low-loss single-mode optical fiber provided in the embodiment of the present application, by replacing the effect of F doping on the viscosity adjustment with trace P doping, effectively reduce the GE doping amount in the core layer, and reduce Rayleigh scattering, under the condition that the refractive index of the core layer is kept unchanged.

Furthermore, with regard to the low-loss single-mode optical fiber provided in the embodiment of the present application, its core layer employs a parabolic gradient design, which can realize gradual change of the physical properties and doping concentration, eliminate or reduce the interfacial stress difference between the core layer and the cladding layer, and decrease the dispersion value at 1,550 nm to meet the requirements of the G652 standard under the condition that the mode field diameter remains unchanged.

In an example of the present application, the outer cladding layer 700 is made of pure silica, and is not doped with other elements.

In an example of the present application, the outer core layer 200 is a silica glass layer doped with GeO₂, P element and F element.

In an example of the present application, the low-loss single-mode optical fiber is suitable for MCVD, PCVD and other manufacturing processes or hybrid processes.

In an example of the present application, the cable cut-off wavelength shift position of the low-loss single-mode optical fiber is adjustable (≤ 1,530 nm).

It should be noted that when the single-mode optical fiber is used at 1,550 nm wavelength, the macrobend loss for 15 mm radius minus 10 turns is smaller than or equal to 0.03 dB; the macrobend loss for 10 mm radius minus 1 turn is smaller than or equal to 0.1 dB, the macrobend loss for 7.5 mm radius minus 1 turn is smaller than or equal to 0.5 dB.

The low-loss single-mode optical fiber of the present application will be described in detail below in Examples 1 to 6.

A preform core rod is prepared by adopting a modified in-tube chemical vapor deposition (MCVD) process or a plasma chemical vapor deposition (PCVD) process, wherein, the doped layer 500 may be formed by a quartz substrate tube doped with F element; a quartz tube doped with F element is used as a deposition substrate tube, SiCl₄ and O₂ are used as the raw materials for SiO₂; SiF₄, SF₆, C₂F₆ or CF₄ is used as the raw material for F doping, GeCl₄ is used as the raw material for Ge doping, and POCl₃ is used as the raw material for P doping.

A reciprocating hydrogen-oxygen torch or plasma is used as a heat source, and a depressed layer, an inner cladding layer, an outer core layer and an inner core layer are sequentially deposited on the inner surface of the F-doped substrate tube by controlling the concentrations of the doped elements in the tube; then, the deposition tube is melted and shrunk to an appropriate inner diameter at a high temperature, SF₆ or C₂F₆ and O₂ are charged and the impurities adhered to the inner surface are etched and removed under the heating by a hydrogen-oxygen torch or a graphite furnace before the inner diameter is reduced to zero, and finally a solid core rod is obtained after high temperature melting and shrinkage.

A F-doped quartz bushing is adopted as the second depressed layer 600 and a pure quartz bushing is adopted as the outer cladding layer 700 for drawing, and the optical fiber is obtained by high-temperature drawing.

The profile structure of the optical fiber comprises the inner core layer 100, the outer core layer 200, the inner cladding layer 300, the first depressed layer 400, the doped layer 500, the second depressed layer 600 and the outer cladding layer 700, the radius of the inner core layer 100 is R1, and the relative refractive index difference is Δ1; the radius of the outer core layer 200 is R2, and the relative refractive index difference is Δ2; the radius of the inner cladding layer 300 is R3, and the relative refractive index difference is Δ3; the radius of the first depressed layer 400 is R4, and the relative refractive index difference is Δ4; the radius of the doped layer 500 is R5, and the relative refractive index difference is Δ5; the radius of the second depressed layer 600 is R6, and the relative refractive index difference is Δ6; the outer cladding layer 700 is made of pure silica, with a radius R7 of 62.5 µm and a relative refractive index difference of 0%.

**Table 1 - Optical Fiber Parameters of Different Structural Designs**

| Example | R1/µm | Δ1/% | R2/µm | Δ2/% | R3/µm | Δ3/% | R4/µm | Δ4/% | R5/µm | Δ5/% | R6/µm | Δ6/% |
|---|---|---|---|---|---|---|---|---|---|---|---|---|
| Example 1 | 2.5 | 0.14 | 6.3 | 0.00 | 8.8 | -0.23 | 13.6 | -0.34 | 20.5 | -0.22 | 40.5 | -0.28 |
| Example 2 | 2.5 | 0.11 | 6.4 | 0.00 | 9.0 | -0.22 | 13.5 | -0.35 | 21.0 | -0.23 | 41.0 | -0.28 |
| Example 3 | 2.4 | 0.14 | 6.3 | 0.00 | 8.9 | -0.22 | 13.7 | -0.34 | 21.0 | -0.22 | 40.0 | -0.27 |
| Example 4 | 5.8 | 0.15 | \ | \ | 8.3 | -0.21 | 13.3 | -0.34 | 20.3 | -0.20 | 41.3 | -0.27 |
| Example 5 | 2.6 | 0.19 | 6.3 | 0.02 | 8.7 | -0.21 | 13.8 | -0.34 | 41.5 | -0.23 | \ | \ |
| Example 6 | 2.6 | 0.14 | 6.3 | 0.00 | 9.1 | -0.21 | 16.5 | -0.42 | 42.0 | -0.21 | \ | \ |

**Table 2 - Concentration Distribution of Doped Elements in Optical Fibers with Different Structural Designs**

| Doped element | Example 1 | | | | | |
|---|---|---|---|---|---|---|
| | Inner core layer | Outer core layer | Inner cladding layer | First depressed layer | Transition layer | Second depressed layer |
| F (mol%) | / | 0.1~0.95 | 0.95 | 1.47 | 0.85 | 1.2 |
| P (mol%) | 0.1 | 0.1 | 0.1 | 0 | 0 | / |
| GeO₂ (mol%) | 0.14~0.55 | 0.14 | 0.14 | 0 | 0 | / |

| | Example 2 | | | | | |
|---|---|---|---|---|---|---|
| | Inner core layer | Outer core layer | Inner cladding layer | First depressed layer | Transition layer | Second depressed layer |
| F (mol%) | / | 0.1~0.95 | 0.95 | 1.47 | 0.85 | 1.2 |
| P (mol%) | 0.1 | 0.1 | 0.1 | 0 | 0 | / |
| GeO₂ (mol%) | 0.14~0.45 | 0.14 | 0.14 | 0 | 0 | / |

| | Example 3 | | | | | |
|---|---|---|---|---|---|---|
| | Inner core layer | Outer core layer | Inner cladding layer | First depressed layer | Transition layer | Second depressed layer |
| F (mol%) | 0.1 | 0.1~0.95 | 0.95 | 1.47 | 0.85 | 1.2 |
| P (mol%) | 0.1 | 0.1 | 0.1 | 0 | 0 | / |
| GeO₂ (mol%) | 0.14~0.65 | 0.14 | 0.14 | 0 | 0 | / |

| | Example 4 | | | | | |
|---|---|---|---|---|---|---|
| | Inner core layer | Outer core layer | Inner cladding layer | First depressed layer | Transition layer | Second depressed layer |
| F (mol%) | / | / | 0.95 | 1.47 | 0.85 | 1.2 |
| P (mol%) | 0.1 | / | 0.1 | 0 | 0 | / |
| GeO₂ (mol%) | 0.55 | / | 0.14 | 0 | 0 | / |

| | Example 5 | | | | | |
|---|---|---|---|---|---|---|
| | Inner core layer | Outer core layer | Inner cladding layer | First depressed layer | Transition layer | Second depressed layer |
| F (mol%) | / | 0.1~0.95 | 0.95 | 1.47 | 0.85 | / |
| P (mol%) | 0.1 | 0.1 | 0.1 | 0 | 0 | / |
| GeO₂ (mol%) | 0.14~0.68 | 0.14 | 0.14 | 0 | 0 | / |

| | Example 6 | | | | | |
|---|---|---|---|---|---|---|
| | Inner core layer | Outer core layer | Inner cladding layer | First depressed layer | Transition layer | Second depressed layer |
| F (mol%) | / | 0.1~0.95 | 0.95 | 2.4 | 0.85 | / |
| P (mol%) | 0.1 | 0.1 | 0.1 | 0 | 0 | / |
| GeO₂ (mol%) | 0.14~0.55 | 0.14 | 0.14 | 0 | 0 | / |

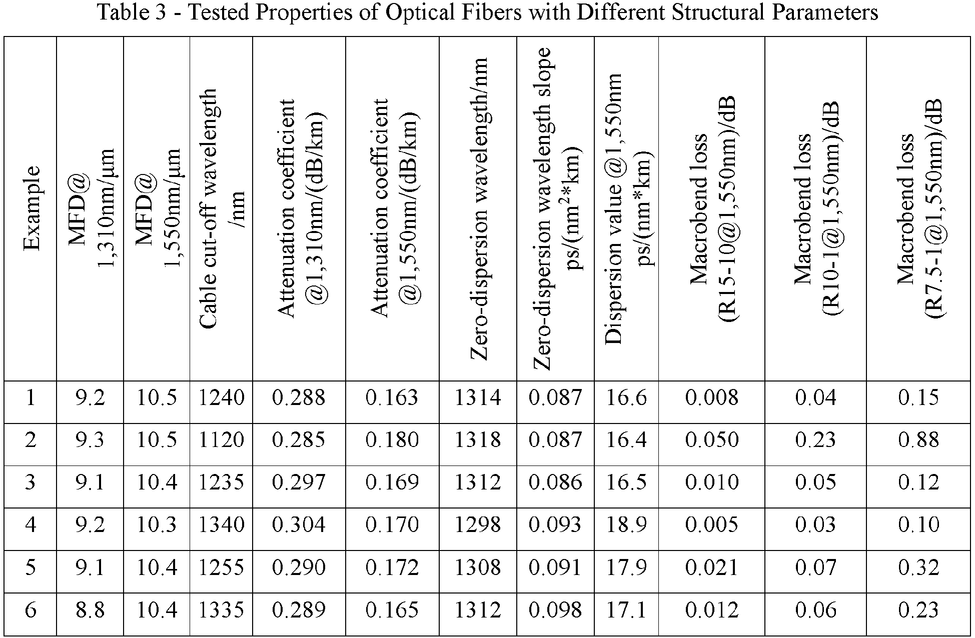

Test standard for MFD (mode field diameter): GBT-15972.45-2008 "*Specification for Optical Fiber Test Methods - Part 45: Measurement Methods and Test Procedures for Transmission and Optical Characteristics - Mode Field Diameter".*

Test standard for cable cut-off wavelength: GBT-15972.44-2008 *"Specification for Optical Fiber Test Methods - Part 44: Measurement Methods and Test Procedures for Transmission and Optical Characteristics - Cut-Off Wavelength".*

Test standard for attenuation coefficient: GBT-15972.40-2008 *"Specification for Optical Fiber Test Methods - Part 40: Measurement Methods and Test Procedures for Transmission and Optical Characteristics - Attenuation".*

Test standard for macrobend loss: GBT-15972.47-2008 *"Specification for Optical Fiber Test Methods - Part 47: Measurement Methods and Test Procedures for Transmission and Optical Characteristics - Macrobend Loss".*

Test standard for dispersion: GBT-15972.42-2008 *"Specification for Optical Fiber Test Methods - Part 42: Measurement Methods and Test Procedures for Transmission and Optical Characteristics - Wavelength Dispersion".*

The hydrogen aging damage resistance property of the optical fibers obtained in the Examples 1 to 6 is tested. The test methods are shown in Table 4, and the test results are shown in Table 5.

**Table 4 - Methods for Hydrogen Aging Damage Resistance Test**

| | Partial pressure of hydrogen | Temperature | Typical sample retention time |
|---|---|---|---|
| Reference method | 1kPa (0.01atm) | +23°C±5°C | About 4-6 days |
| Alternative method | 1kPa (0.01atm) | +65°C±2°C | More than 16 hours |

**Table 5 - Hydrogen Aging Damage Resistance PerformanceTest**

| Sample ID | Before hydrogenation 1240 | After hydrogenation 1240 | Before hydrogenation 1383 | After hydrogenation 1383 | Δ1240 ≥ 0.03 | Δ1383 ≤ 0.01 | Conclusion |
|---|---|---|---|---|---|---|---|
| Example 1 | 0.377 | 0.442 | 0.492 | 0.495 | 0.065 | 0.003 | Pass |
| Example 2 | 0.366 | 0.432 | 0.490 | 0.492 | 0.066 | 0.002 | Pass |
| Comparative Example 3 | 0.366 | 0.447 | 0.479 | 0.483 | 0.081 | 0.004 | Pass |
| Comparative Example 4 | 0.372 | 0.442 | 0.461 | 0.466 | 0.070 | 0.005 | Pass |
| Comparative Example 5 | 0.365 | 0.442 | 0.398 | 0.403 | 0.077 | 0.005 | Pass |
| Comparative Example 6 | 0.363 | 0.451 | 0.442 | 0.445 | 0.088 | 0.003 | Pass |

### For the Example 1:

The radius R1 of the inner core layer 100 is 2.5 µm, and Δ1 is 0.14%; the thickness R2-R1 of the outer core layer 200 is 3.8 µm, and Δ2 is 0%; the thickness R3-R2 of the inner cladding layer 300 is 2.5 µm, and Δ3 is -0.22%; the thickness R4-R3 of the first depressed layer 400 is 4.8 µm, and Δ4 is -0.34%; the thickness R5-R4 of the doped layer 500 is 7.9 µm, and the relative refractive index difference Δ5 is -0.22%; the thickness R6-R5 of the second depressed layer 600 is 20 µm, and the relative refractive index difference Δ6 is -0.28%; the outer cladding layer is made of pure silica, with a radius R7 of 62.5 µm.

The mode field diameter of the drawn optical fiber is 9.2 µm at 1,310 nm and 10.5 µm at 1,550 nm, the cable cutoff wavelength is 1,240 nm, the attenuation is 0.288 dB/km at 1,310 nm and 0.163 dB/km at 1,550 nm respectively, the zero-dispersion wavelength is 1,314 nm, and the zero-dispersion wavelength slope is 0.087 ps/(nm²*km), the dispersion value at 1,550 nm is 16.6 ps/(nm*km), and all properties of the optical fiber conform to the G652 standard.

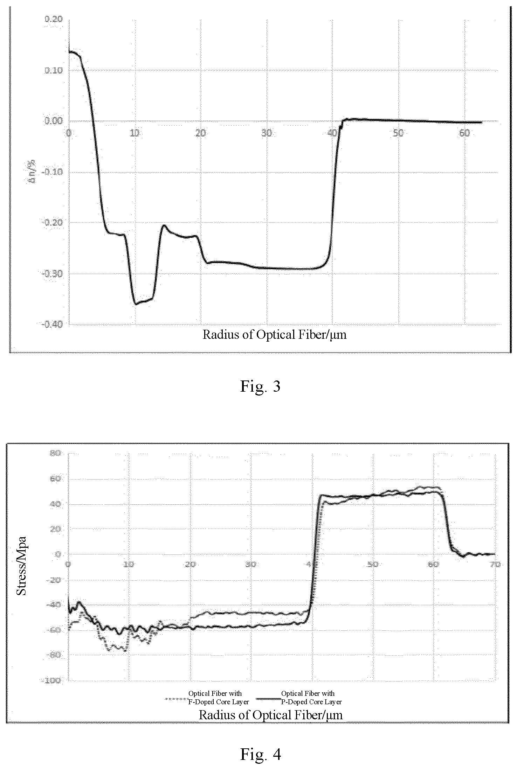

The refractive index distribution of the optical fiber obtained in the Example 1 is tested with an optical fiber refractive index profile tester (the standard wavelength of the scanning laser is 632 nm), and the obtained refractive index distribution is shown in Fig. 3.

The stress distribution of the optical fiber obtained in the Example 1 is tested with an optical fiber stress tester; in addition, in the same profile design, the inner/outer core layers are prepared by means of doping F only without P, and the comparison of the stress distribution between the two optical fibers is shown in Fig. 4.

It can be seen that in the same profile design, compared with the optical fiber with the core layers doped with P, more Ge should be doped in the core layers of the optical fiber doped with F, in order to ensure the refractive index difference value of the core layers; consequently, Rayleigh scattering is increased, and the sudden stress change between the core layer and the depressed layer is more obvious. The effect of doping P in the core layers is better than that of doping F in the core layer on reduction of the stress mismatch between the core layer and the depressed layer.

### For the Example 2:

On the basis of the Example 1, the refractive index Δ1 is decreased from 0.14% to 0.12%, while other structural parameters are essentially the same as those in the Example 1. In that design, after the refractive index of the core layer is decreased, the zero-dispersion wavelength is shifted to 1,318 nm, the zero-dispersion wavelength slope is 0.087 ps/(nm²*km), the dispersion value at 1,550 nm is 16.4 ps/(nm*km), the attenuation at 1550 nm is 0.180 dB/km and increased obviously, the attenuation at 1,310 nm is 0.285 dB/km and decreased slightly, the cable cut-off wavelength is decreased to 1,120 nm, the bend loss is increased obviously in cases of R15*10 @ 1,550 nm, R10*1 @ 1,550 nm, and R7.5*1 @ 1,550 nm, indicating that there is leakage of optical signal at longer wavelengths.

For the optical fiber design with a smaller mode field diameter, decreasing the refractive index difference between the core layer and the cladding layer will lead to a relatively smaller cut-off wavelength in the fundamental mode and leakage of optical output at longer wavelengths. Therefore, it is necessary to widen or deepen the depressed layer or maintain a sufficient refractive index difference between the core layer and the cladding layer.

### Example 3:

Compared with the Example 1, the refractive index parameters corresponding to each structural layers of the optical fiber in the Example 3 remain unchanged essentially. Since the inner core layer is co-doped with Ge/F/P, under the condition that the refractive index of the core layer remains unchanged, the amount of Ge doped in the core layer is increased, resulting in increased Rayleigh scattering loss. In this design, the attenuation of the optical fiber at 1,310 nm is increased to 0.297 dB/km, and the attenuation at 1,550 nm is increased to 0.169 dB/km, while other parameters remain unchanged essentially.

### Example 4:

Compared with the Example 1, under the condition that the diameter and height of the core layer is kept unchanged, the core is changed into a stepped design, the half-height width of the core layer is increased compared with that in the Example 1. In addition, owing to the sudden stress change between the core layer and the cladding layer being aggravated, although the bending loss is decreased, the attenuations at 1,310 nm and 1,550 nm are increased to 0.304 dB/km and 0.178 dB/km, the cable wavelength is increased to 1,340 nm, and the zero-dispersion wavelength is shifted to 1,298 nm, the zero-dispersion wavelength slope is 0.093 ps/(nm²*km), the dispersion value at 1,550 nm is 18.9 ps/(nm*km), and the optical fiber dispersion index exceeds the value specified in the G652 standard.

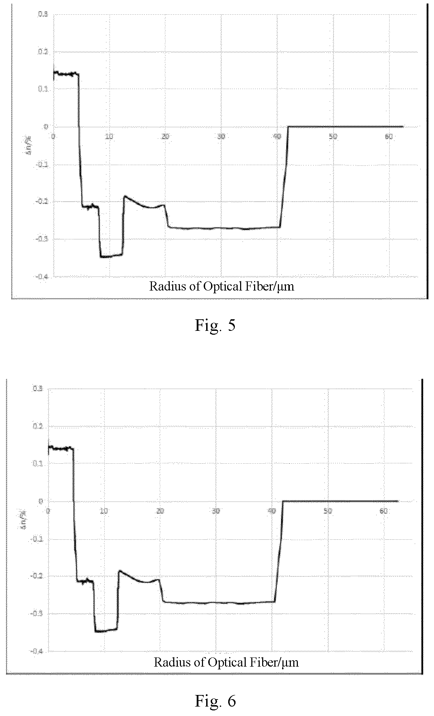

As shown in Fig. 5, under the condition of the same refractive index difference of the core layer and that the mode field diameter remains unchanged, compared with the parabolic gradient design of the core layer, the stepped design of the core layer has obvious shortcomings in attenuation and dispersion control.

### Example 5:

Refer to Fig. 6 and the table contents. Compared with the Example 1, the second depressed layer 600 is absent in the Example 5. In order to prevent optical power leakage, the refractive index of the core layer is increased by 0.19%, the Ge doping amount in the core layer is increased, the attenuation at 1,550 nm is increased to 0.172 dB/km, and the cable wavelength has no obvious change. The zero-dispersion wavelength is shifted to 1,308 nm, the zero-dispersion wavelength slope is 0.090 ps/(nm²*km), the dispersion value at 1,550 nm is 17.9 ps/(nm*km), and the optical fiber dispersion index is close to the upper limit specified in the G652 standard.

### Example 6:

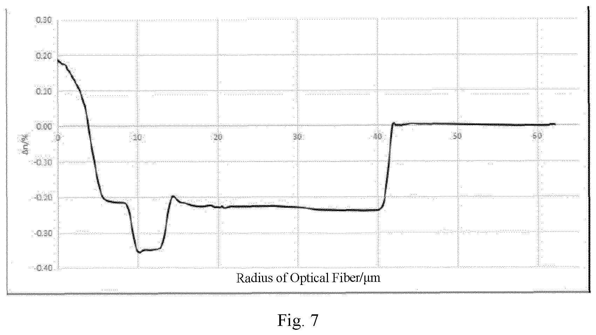

Refer to Fig. 7 and the table contents. Compared with the Example 1, the second depressed layer 600 is absent in the Example 6. In order to prevent optical power leakage and ensure low a bending loss, the width and depth of the first depressed layer 400 are increased to 7.4 µm and -0.42% respectively, the cable wavelength is increased to 1,335 nm, which exceeds the upper limit specified in the G652 standard, and the mode field diameter is reduced to 8.8 µm, which is close to the lower limit specified in the standard, and the dispersion parameter has no obvious change.

In summary, the low-loss single-mode optical fiber in the embodiments of the present application comprises the core layer and the cladding layer surrounding the core layer, wherein the core layer comprises the inner core layer 100 and the outer core layer 200, and the cladding layer comprises the inner cladding layer 300, the first depressed layer 400, the doped layer 500, the second depressed layer 600 and the outer cladding layer 700, which are layered sequentially from the center to the periphery; the inner core layer 100 is doped with P and GeO₂, the outer core layer 200 is doped with F, P and GeO₂, the inner cladding layer 300 is doped with GeO₂, P and F, the first depressed layer 400 is doped with GeO₂ and F, the doped layer 500 is doped with GeO₂ and F, and the second depressed layer 600 is doped with GeO₂ and F. By means of a reasonable optical fiber structure design and core layer doping control, Rayleigh scattering can be reduced by adjusting the doped elements in the inner core layer and the outer core layer on the premise that the profile structure of the core rod is unchanged, so as to attain a purpose of reducing the attenuation coefficient of the optical fiber.

Besides, the position of the cut-off wavelength shift is controlled by adjusting the refractive index of a matching F-doped sandwich tube that is used in the drawing, so that the drawn optical fiber can be adjusted to different wavelength ranges, and the optical fiber has lower attenuation loss and better bending resistance on the premise that all properties of the optical fiber are compatible with the G.652 standard.

Furthermore, the low-loss single-mode optical fiber provided in the embodiments of the present application employs a parabolic gradient design, thus, on one hand, gradual change of the physical properties and doping concentration can be realized, and the interfacial stress difference between the core layer and the cladding layer is eliminated or reduced; on the other hand, the zero-dispersion wavelength slope and the dispersion value at 1,550 nm of the optical fiber can be effectively reduced under the condition that the mode field diameter is kept unchanged, and dispersion compensation can be reduced when the optical fiber is used as a long-distance trunk transmission fiber.

At the same time, the low-loss single-mode optical fiber provided in the embodiments of the present application is provided with a second depressed layer 600 near the outer cladding layer 700, thus, on the premise that optical power leakage is prevented, the refractive index of the core layer can be effectively reduced, the Rayleigh scattering loss caused by GeO₂ doping can be reduced, and a low attenuation loss of the optical fiber can be ensured.

The examples or embodiments in this specification are described in a progressive way, each example focuses on the differences from the other examples, and the individual examples can serve as references for each other for identical or similar parts among the examples.

It should be noted that references to "one example", "examples", "an exemplary example" or "some examples" in the specification mean that the described examples may include a specific features, structures or characteristics, but not every example necessarily includes the specific features, structures or characteristics. Moreover, such phrases do not necessarily refer to the same example. Furthermore, when specific features, structures or characteristics are described in connection with an example, it is within the range of knowledge of those skilled in the art to realize such features, structures or characteristics in connection with other examples that are described explicitly or not described explicitly.

Generally speaking, terms should be understood at least in part according to the use in the context. For example, depending at least in part on the context, the term "one or more" as used herein can describe any feature, structure or characteristic in a singular sense, or can be used to describe a combination of features, structures or characteristics in a plural sense. Similarly, depending at least in part on the context, terms such as "a" or "the" can also be understood to convey singular usage or plural usage.

It can be easily understood that "on", "over" and "above" in the present disclosure should be interpreted in the broadest way, so that "on" not only means "directly on something" but also means "on something" with intermediate features or layers therebetween, and "over" or "above" not only means "over" or "above" something, but also means "over" or "above" something without any intermediate feature or layer therebetween (i.e., directly over or above something).

In addition, for the convenience of explanation, spatially relative terms, such as "below", "under", "over", and "above", can be used herein to describe a relationship of one element or feature with respect to other elements or features as illustrated in the accompanying drawings. The spatially relative terms are intended to encompass different orientations of devices in use or operation in addition to those shown in the accompanying drawings. The devices may have other orientations (rotated by 90 degrees or in other orientations), and the spatially relative descriptors used herein may also be interpreted accordingly.

In the end, it should be noted that the above examples are only provided to explain the technical scheme of the present application, but don't constitute any limitation on the present application; while the present application is described in detail with reference to the examples, those having ordinary skills in the art can readily understand that various modifications can be made to the technical schemes described in the above examples or equivalent replacements may be made to all or a part of the technical features therein; however, such modifications or replacements do not make the essence of the corresponding technical schemes deviate from the scope of the technical schemes in the examples of the present application.

## Claims

1. A low-loss single-mode optical fiber, comprising a core layer and a cladding layer surrounding the core layer, wherein the core layer comprises an inner core layer and an outer core layer, the inner core layer is doped with P and GeO₂, and the outer core layer is doped with F, P and GeO₂.

2. The low-loss single-mode optical fiber according to claim 1, **characterized in that**,
the inner core layer is doped with GeO₂ at a molar concentration of 0.10 to 1.5 mol% and the P element at a molar concentration of 0.01 to 0.3 mol%;
the outer core layer is doped with GeO₂ at a molar concentration of 0.10 to 1.5 mol%, the P element at a molar concentration of 0.01 to 0.3 mol%, and the F element at a molar concentration greater than 0 mol% and smaller than 1.5 mol%.

3. The low-loss single-mode optical fiber according to claim 1, **characterized in that**, the refractive index of the core layer presents a parabolic gradient distribution.

4. The low-loss single-mode optical fiber according to claim 1, **characterized in that**, the cladding layer comprises an inner cladding layer, a first depressed layer, a doped layer, a second depressed layer and an outer cladding layer, which are layered sequentially from the center to the periphery; the inner cladding layer is doped with GeO₂ at a molar concentration of 0 to 0.2 mol%, the P element at a molar concentration of 0.01 to 0.3 mol%, and the F element at a molar concentration of 0.5 to 1.5 mol%;
the first depressed layer is doped with GeO₂ at a molar concentration of 0 to 0.2 mol% and the F element at a molar concentration of 0 to 2.0 mol%;
the doped layer is doped with GeO₂ at a molar concentration of 0 to 0.2 mol% and the F element at a molar concentration of 0 to 2.0 mol%;
the second depressed layer is doped with GeO₂ at a molar concentration of 0 to 0.2 mol% and the F element at a molar concentration of 0 to 3.0 mol%.

5. The low-loss single-mode optical fiber according to claim 4, **characterized in that**,
a relative refractive index difference Δ1 between the inner core layer and the outer cladding layer is 0.10% to 0.25%;
a relative refractive index difference Δ2 between the outer core layer and the outer cladding layer is 0% to 0.20%;
a relative refractive index difference Δ3 between the inner cladding layer and the outer cladding layer is -0.10% to -0.30%;
a relative refractive index difference Δ4 between the first depressed layer and the outer cladding layer is -0.25% to -0.50%;
a relative refractive index difference Δ5 between the doped layer and the outer cladding layer is -0.30% to 0%;
a relative refractive index difference Δ6 between the second depressed layer and the outer cladding layer is -0.50% to 0%.

6. The low-loss single-mode optical fiber according to claim 4, **characterized in that**,
a radius R1 of the inner core layer is 2 to 6 µm;
a radius of the outer core layer is R2, and R2 minus R1 is within a range of 3 to 5 µm;
a radius of the inner cladding layer is R3, and R3 minus R2 is within a range of 2 to 5 µm;
a radius of the first depressed layer is R4, and R4 minus R3 is within a range of 2 to 8 µm;
a radius of the doped layer is R5, and R5 minus R4 is within a range of 5 to 30 µm;
a radius of the second depressed layer is R6, and R6 minus R5 is within a range of 10 to 22 µm;
a radius R7 of the outer cladding layer is 60 to 65 µm.

7. The low-loss single-mode optical fiber according to claim 1, **characterized in that**, an application wavelength range of the low-loss single-mode optical fiber is 1,310 to 1,550 nm.

8. The low-loss single-mode optical fiber according to claim 7, **characterized in that**,
a mode field diameter of the low-loss single-mode optical fiber at an application wavelength of 1,310 nm is 8.7 to 9.7 µm;
the mode field diameter of the low-loss single-mode optical fiber at an application wavelength of 1,550 nm is 9.5 to 10.5 µm.

9. The low-loss single-mode optical fiber according to claim 7, **characterized in that**, an attenuation coefficient of the low-loss single-mode optical fiber at the application wavelength of 1,310 nm is smaller than or equal to 0.350 dB/km;
the attenuation coefficient of the low-loss single-mode optical fiber at the application wavelength of 1,550 nm is smaller than or equal to 0.175 dB/km.

10. The low-loss single-mode optical fiber according to claim 7, **characterized in that**,
a zero-dispersion wavelength range of the low-loss single-mode optical fiber is 1,300 to 1,324 nm, a dispersion slope of the low-loss single-mode optical fiber at the zero-dispersion wavelength is smaller than or equal to 0.092 ps/(nm²*km);
a dispersion coefficient of the low-loss single-mode optical fiber at the application wavelength of 1,550 nm is smaller than or equal to 18 ps/(nm*km).
